# EUROPEAN PATENT SPECIFICATION

(11) **EP 0 788 319 B1**
(45) Date of publication and mention of the grant of the patent: **03.04.2002**
(21) Application number: 95935787.2
(22) Date of filing: 06.11.1995
(51) Int. Cl.: A23L 3/34, A23B 7/153, A23B 4/18, B65D 81/34, B65D 81/28, B29D 7/01

(54) **METHOD AND MATERIAL FOR EXTENDING THE SHELF-LIFE OF FRESH FOODS**
METHODE UND MATERIAL ZUR VERLÄNGERUNG DER LAGERFÄHIGKEIT VON FRISCHEN LEBENSMITTELN
PROCEDE ET MATERIAUX PERMETTANT DE PROLONGER LA DUREE DE CONSERVATION D'ALIMENTS FRAIS

(30) Priority: 09.11.1994 CA 2135416
(43) Date of publication of application: 13.08.1997
(73) Proprietor: TRANSFORM PACK INC., Dieppe, New Brunswick E1A 5E8 (CA)
(72) Inventor: MEIER, Hans J., Riverview, New Brunswick E1B 1H9 (CA); LANDRY, Germain, Fredericton, New Brunswick E3A 5H3 (CA); CAISSIE, Raymond, Dieppe, New Brunswick E1A 5E8 (CA)
(74) Representative: Casati, Wilhelm, Dipl.-Ing.
(86) International application number: CA9500632
(87) International publication number: WO9614760

(56) References cited:
- EP-A- 0 473 091
- CA-A- 1 053 497
- PATENT ABSTRACTS OF JAPAN vol. 007 no. 011 (C-145) ,18 January 1983 & JP,A,57 170175 (FUROINTO SANGYO KK) 20 October 1982,
- DATABASE WPI Section Ch, Week 8248 Derwent Publications Ltd., London, GB; Class D13, AN 82-02888J & JP,A,57 170 176 ( TOPPAN PRINTING KK) , 20 October 1982
- DATABASE WPI Section Ch, Week 8330 Derwent Publications Ltd., London, GB; Class A96, AN 83-719706 & JP,A,58 101 670 ( TOPPAN PRINTING KK) , 16 June 1983

## Description

### FIELD OF THE INVENTION

The invention concerns extending the shelf-life of fresh food products. More particularly, it is directed to a sheet for wrapping fresh food products and to a method of extending their shelf-life using the sheet.

### BACKGROUND OF THE INVENTION

Methods are known for curing or marinating fresh food products using various chemical formulations. Examples include the curing of meat using sodium chloride and curing salts comprising nitrates and nitrites: Canadian Patent 905,744 (Komarik) and U.S. Patent 3,526,521 (Komarik); improving shelf life characteristics using a composition comprising a phosphate, ascorbic acid and citric acid: U.S. Patent 4,818,548 (Cheng). Methods are known for protecting food against microorganisms using preserving liquids: Canadian Patent 1,329,890 (Saitoh) and Canadian Patent Application 2,100,074 (Sekiyama); for marinating meat by means of a marinating liquid: U.S. Patent 3,537,864 (Magiera) ; and for transferring modifiers and flavorings to food from their packaging: Canadian Patent Applications 2,007,522 (Ito et al.) and 2,049,271 (Juhl). However, the known methods do not enable food processors to extend the shelf-life of fresh food products, such as fresh meat, poultry, fish, vegetables or fruit, by packaging such products and curing or marinating the foods in their own packaging at the low temperatures found in food chillers, resulting in food products with an extended shelf-life ready for the consumer to eat or cook.

According to Juhl, there are used only antioxidants and antimicrobial agents, which are watersoluble, so that these materials can be leached out from a carrier without solubilizing the adhesive as such. The carrier has thereby only a limited capacity of retaining the agents. Further, the method known from this publication discloses only cooling down the food but then maintaining it at room temperature. Ito et al is directed to size-layers which are weakened by processing moisture at a processing temperature of above 80°C. Also me use of steam is disclosed which is then mainly responsible for dissolving the size layer.

### SUMMARY OF THE INVENTION

We have invented a method of extending shelf life of fresh foods and a sheet for wrapping fresh foods in order to cure or marinate them at low temperatures to extend their shelf-life.

Our method of extending the shelf-life of fresh foods by curing or marinating during storage at low temperature in a chiller comprises:
(a) contacting said fresh foods with a sheet of film suitable for contact with food, said film having at least on one surface a layer of edible adhesive, said adhesive being suitable to dissolve in fluid from said foods at low temperature in a chiller, i.e. in the range of -3°C to +4°C, and having a curing or marinating agent on the surface presented to the foodsurface whereby the amount of said agent is selected to be sufficient for curing or marinating said food when being in intimate contact with the foodsurface;
(b) sealing said film-food-combination in a container that is substantially impermeable to air and microorganisms; and
(c) maintaining said sealed film-food-combination at said low temperatures in the chiller until said food is substantially cured or marinated.

At that time, the food can be used by a consumer, or maintained at low temperature during its extended shelf-life until purchased for use, or it can be frozen for storage.

The sheet comprises a film that has at least on one surface a layer of edible adhesive, said adhesive being suitable to dissolve in fluid from said foods at low temperature in the chiller, i.e. in the range of -3°C to +4°C, and has a curing or marinating agent on the surface presented to the foodsurface whereby the amount of said agent is selected to be sufficient for curing or marinating said food when being in intimate contact with the foodsurface.

### BRIEF DESCRIPTION OF THE DRAWINGS

In drawings which illustrate embodiments of the invention,
Figure 1 is a cross-section of the sheet;
Figure 2 is a sectional view of a food portion wrapped between two sheets; and
Figure 3 is a graph of the total plate count of Gravad Lax Atlantic salmon packaged according to 'the invention as a function of days of storage at 2°C.

### DETAILED DESCRIPTION OF THE PREFERRED EMBODIMENTS

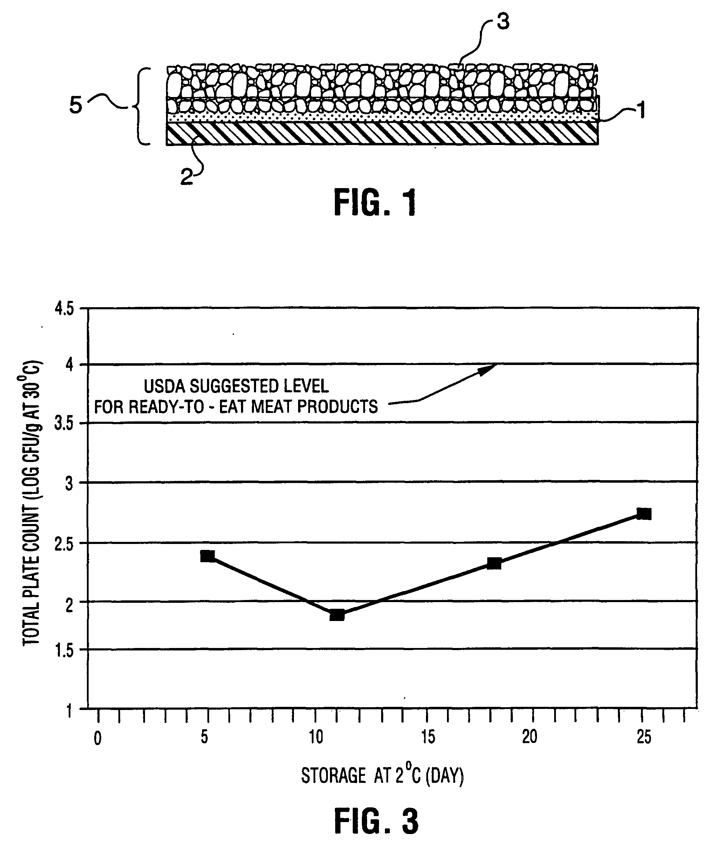

The method of extending shelf-life according to the invention uses a packaging material illustrated in Figure 1. It comprises a film 2, adhesive 1 and curing or marinating agent 3. These together comprise sheet 5.

The film can be any film, foil or laminate that is suitable for contact with food. Suitable films are described in Plastic Films for Packaging, C.J. Benning, Technomic Publishing Inc., (1983), Ch. 6, and in Canadian Patent Application 2,086,481 (Kilton). The film can be made of such materials as polyvinyl chloride, polyethylene, polypropylene, polystyrene, polyamides and polyesters. It can also be a metal foil or metallized film. The term "film" in this specification is intended to encompass all suitable films, foils and laminates. The film is of a thickness commonly used for food packaging films, typically between .001" and .020".

In one embodiment of the invention, the food is vacuum packed in a bag or container after being wrapped between two sheets 5. In such case, the film need not be impermeable to air and microorganisms since that function is fulfilled by the bag or container. However, where no vacuum bag or container is used and the sheet 5 is the only wrapping for the food, film 2 should be impermeable to air and microorganisms.

The adhesive that forms layer 1 is an edible substance whose function is to adhere the curing or marinating agent to the film at desired loadings of the agent during the packaging operation. The adhesive chosen for a particular fresh food product should be one which dissolves in the juices or fluids of the food product at temperatures around 0°C. This characteristic is important in reducing the moisture in the wrapped food product and thus contributing to extending its shelf-life. The preferred adhesive is a mixture of a natural polysaccaride, such as maltodextrin, with whey protein concentrate, water and a viscosity modifier. The preferred adhesive is prepared by blending together 40-50% by weight maltodextrin, 5-15% by weight whey protein concentrate, up to 1% xanthan gum and 40-50% water. The adhesive should have a consistency that makes it suitable for application to the film. The xanthan gum is a viscosity modifier added to optimize the consistency of the adhesive.

The curing or marinating agent 3 is a substance capable of curing or marinating the particular fresh food at low temperatures, i.e. at temperatures around 0°C. In this specification, the term "curing or marinating agent" means any edible composition effective for curing or marinating fresh foods at temperatures around 0°C. It can be a mixture of substances and may be in the form of chips, powders, irregular pieces and other forms. Powdered materials having a high surface area are preferred in order to have a maximum effect on the fresh food product.

The curing or marinating agent permits the food product to remain commercially acceptable after aging in a sealed package; absent such agent, the food product would not be in commercially acceptable condition after aging. In the case of red meat, the agents used are referred to as curing agents; in the case of fish and other seafood, as marinating agents. Preferred curing or marinating agents may include mixtures of various of the following substances: vinegar, sugar, beef base, salt, glucose solids, hydrolysed plant protein, hydrogenated peanut oil, yeast extract, sugar, citric acid, cream of tartar, herbs, spices and flavorings.

For aging red meat, a curing agent that can be used is a powdered mixture of sugar, beef base, salt, glucose solids, hydrolysed plant protein, hydrogenated peanut oil, yeast extract, spices, flavorings and dried cranberries.

For curing fresh salmon, a marinating agent that can be used is a powdered mixture of salt, sugar, citric acid, cream of tartar, herbs, spices and flavorings. Marinating agents usually include an acidic component, such as citric acid.

Depending on the application, meat stocks, edible acids and preservatives, natural and artificial flavoring agents and various herbs and spices can be included in the curing or marinating agent.

The fresh food products to be processed according to the invention can be any fresh foods that can be cured, marinated during aging at low temperatures, including meat, seafood, poultry, vegetables and fruit.

To prepare the sheet 5, the adhesive is evenly applied to one side of the film by conventional means such as spraying, rolling or brushing. The thickness of the adhesive layer is made sufficient to permit the desired loading of curing or marinating agent to adhere to the film. Preferably, about 15-25 g/m² of adhesive is applied. The curing or marinating agent is then sifted onto the adhesive-covered surface of the film. Any excess curing or marinating agent is removed by vibration or gravity. The preferred loading is in the range of 80-160 g/m². The sheet can be rolled for future use or cut into sheets of a size suitable for a particular application.

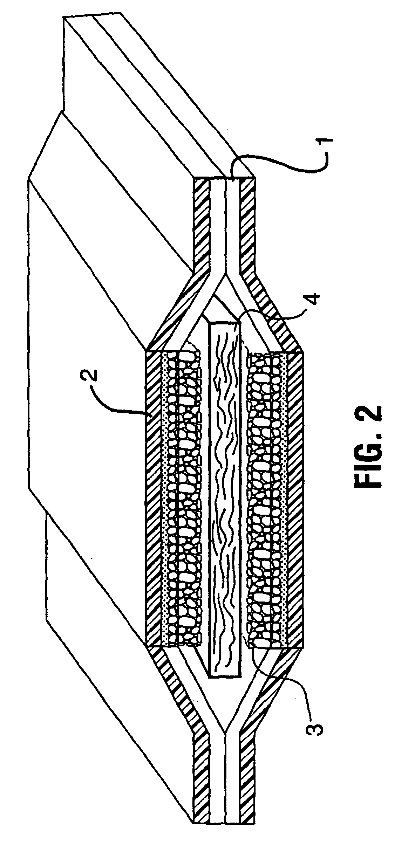

In order to carry out the method of the invention, a portion of fresh food is placed between two sheets, with the agent in intimate contact with the food, and is sealed, preferably vacuum sealed. Figure 2 illustrates a food product 4 between two sheets. Alternatively, the food can be placed between two sheets and placed in a bag or container which is then vacuum sealed. It is also possible to wrap and seal the food product in a single sheet, but it is considered more convenient to use two sheets, one lower and one upper, in the packaging operation. All of these wrapping and sealing operations can be carried out with commercially-available food processing equipment well known to persons in the food-packaging industry.

In one embodiment of the invention, the film 2 is coated with adhesive and curing or marinating agent on both sides thereof. Portions of food can be wrapped in contact with both sides of such a sheet, making a package of two food portions. Similarly, a package of many food portions can be made by using a plurality of sheets coated on both sides.

The sealed food product is maintained at a low temperature in a chiller at least until the food is substantially cured or marinated. In this specification, "low temperature" means a temperature within a few degrees of 0°C. The chiller temperature is preferably in the range of -3°C to +4°C, more preferably -1°C to +4°C, the particular temperature depending on the particular food product.

Curing and marinating times vary widely with the fresh food product. Red meat is preferably maintained at -3°C to +2°C for 15-35 days, depending on the grade of meat. Salmon is preferably maintained at 0°C for 3-5 days. The packaged food product has then been aged and cured or marinated, and has an extended shelf-life. It is ready for consumer use. It can also be maintained in the chiller during its effective shelf-life, or it can be frozen for storage for future use.

Figure 3 shows the total plate count (logarithm of the colony-forming units per gram) at 30°C of Gravad Lax Atlantic salmon packaged for marinating in accordance with the invention at 2°C, at intervals after the date of packaging. The pH of the marinating agent is 3.6. The graph shows that even after 25 days, the total plate count is well below the USDA suggested level for ready-to-eat meat products.

The following examples illustrate embodiments of the invention.

### Example 1

An adhesive composition was prepared by blending 45% by weight maltodextrin (supplied by UFL Foods Inc., Montreal, Quebec), 10% by weight whey protein concentrate (supplied by Ault Foods Limited of Winchester, Ontario), 0.5% xanthan gum and about 44% by weight of water, until the mixture had a smooth consistency. An even coating of this adhesive was applied by means of a roller to a film. Curlam 8088-K (trademark) plastic film manufactured by Curwood Packaging (Canada) Ltd. with a thickness of .0035" was used. About 20 g/m² of adhesive was applied to the film. The sheet was then ready for the application of curing or marinating agents as described in the following examples.

### Example 2

Onto the adhesive-covered surface of the film of Example 1 was sprinkled a curing agent comprising 30% sugar, 16% beef base, 16% chicken base, 10% celery salt, 8% paprika, 5% yeast extract, 5% black pepper, 5% salt, 3% onion powder, 1% garlic powder and 1% parsley. About 90 g/m² of the agent was loaded. Portions of fresh rib eye and sirloin steaks were placed between two sheets, with the curing agent in intimate contact with the steaks. These were placed in a bag and vacuum sealed. The packaged products were stored in a chiller at a temperature between -1°C and +1°C for 21 days. The packaged products were then ready to either be cooked by a consumer, or maintained in a chiller during their extended shelf-life, or frozen for storage.

### Example 3

Onto the adhesive-covered surface of the film of Example 1 was sprinkled a marinating agent comprising 40% salt, 30% sugar, 23.5% pepper, 0.5% dill, 5% citric acid and 1% cream of tartar. The pH of the marinating agent was adjusted to less than 3.6 using the citric acid and cream of tartar. About 90 g/m² of marinating agent was loaded. Portions of fresh salmon fillets, having the skin and pin bones removed, were placed between two suitable-sized sheets, placed in a bag and vacuum sealed. The packaged products were stored in a chiller at 2°C for 4-6 days. At this time, the package was ready to be cooked, or maintained in the chiller during its extended shelf-life, or frozen.

While specific compositions suitable as adhesives and as curing or marinating agents have been described in the specification, many other such compositions could be formulated by persons skilled in the art. All such compositions are considered to be within the scope of our invention, which is defined in the following claims.

## Claims

1. A method of extending shelf life of fresh foods by curing or marinating during storage at low temperatures in a chiller, comprising:
(a) contacting said fresh foods with a sheet of film suitable for contact with food, said film having at least on one surface a layer of edible adhesive, said adhesive being suitable to dissolve in fluid from said foods at low temperature in a chiller, i.e. in the range of -3°C to +4°C, and having a curing or marinating agent on the surface presented to the foodsurface whereby the amount of said agent is selected to be sufficient for curing or marinating said food when being in intimate contact with the foodsurface;
(b) sealing said film-food-combination in a container that is substantially impermeable to air and microorganisms; and
(c) maintaining said sealed film-food-combination at said low temperatures in the chiller until said food is substantially cured or marinated.

2. A method according to claim 1, wherein said edible adhesive composition suitable to dissolve in fluids from said food comprises maltodextrin, whey protein concentrate, a viscosity modifier and water.

3. A method according to claim 2, wherein said adhesive comprises 40 - 50% by weight maltodextrine, 5 - 15 % by weight whey protein concentrate, up to 1% xanthan gum and 40 - 50% water.

4. A method according to one of the claims 1 - 3, wherein said food is red meat.

5. A method according to claim 4, wherein said sealed food is maintained at said low temperature for at least 15 days.

6. A method according to one of the claims 1 to 3, wherein said food is salmon.

7. A method according to claim 6, wherein said low temperature is about 0°C to 2°C.

8. A method according to claim 7, wherein said sealed food is maintained at said low temperature for at least 4 days.

9. A method according to one of the claims 1 to 8, further including the step of evacuating air between said food and said sheet.

10. A method according to one of the claims 1 to 9, wherein said fresh food is meat, seafood, poultry, vegetables or fruit.

11. A method of curing or marinating fresh foods during storage at low temperatures in a chiller comprising:
(a) sealing a portion of fresh food in a sheet comprising:
(i) a film that is substantially impermeable to air and microorganisms and is suitable for contact with food; and
(ii) a layer of edible adhesive suitable to dissolve in fluids from said food applied to a surface of said film, said adhesive being suitable to dissolve influid from said food at a low temperature in a chiller, i.e. in the range of -3°C to +4°C and having a curing or marinating agent on the surface presented to the food surface whereby the amount of said layer is selected to be sufficient for curing or marinating said food; such that said curing or marinating agent containing layer of adhesive is in intimate contact with said food; and
(b) maintaining said sealed food at said low temperature in the chiller at least until said food is substantially cured or marinated.

12. A method according to claim 11, wherein said edible adhesive composition suitable to dissolve in fluids from said food comprises maltodextrin, whey protein concentrate, a viscosity modifier and water.

13. A sheet for wrapping a portion of fresh food for providing simultaneous curing or marinating said food during storage at low temperatures in the chiller, wherein said film has at least on one surface a layer of edible adhesive, said adhesive being suitable to dissolve in fluid from said foods at low temperature in the chiller, i.e. in the range of -3°C to +4°C, and having a curing or marinating agent on the surface presented to the foodsurface whereby the amount of said agent is selected to be sufficient for curing or marinating said food when being in intimate contact with the foodsurface.

14. A sheet according to claim 13, wherein said edible adhesive composition suitable to dissolve in fluids from said food comprises maltodextrin, whey protein concentrate, a viscosity modifier and water.

15. A sheet according to claim 13, wherein said film has a layer of said curing or marinating agent containing adhesive applied to a second surface of said film.

16. A sheet according to claim 13 , wherein said fresh food is meat, seafood, poultry, vegetables or fruit.

## Patentansprüche

1. Verfahren zum Verlängern der Lagerfähigkeit frischer Lebensmittel durch Beizen oder Marinieren während der Lagerung bei niedrigen Temperaturen in einem Kühlgerät, welches Verfahren folgende Schritte aufweist:
(a) Zusammenbringen der frischen Lebensmittel mit einem Blatt eines Films, welcher sich für den Kontakt mit Lebensmitteln eignet, wobei der Film auf mindestens einer Oberfläche eine Schicht aus essbarem Klebstoff aufweist und der Klebstoff geeignet ist, sich in Fluid aus den Lebensmitteln bei niedrigen Temperaturen, d.h. im Bereich von -3° C bis +4° C, in einem Kühlgerät zu lösen, und ein Beiz- oder Mariniermittel auf der, der Lebensmitteloberfläche zugewandten Oberfläche aufweist, wobei die Menge des Mittels ausgewählt ist, um zum Beizen oder Marinieren der Lebensmittel auszureichen, wenn das Mittel in engem Kontakt mit der Lebensmitteloberfläche steht;
(b) Einschließen der Film-Lebensmittel-Kombination in einem Behälter, der im Wesentlichen für Luft und Mikroorganismen undurchlässig ist; und
(c) Halten der eingeschlossenen Film-Lebensmittel-Kombination auf den niedrigen Temperaturen in dem Kühlgerät, bis die Lebensmittel im Wesentlichen gebeizt oder mariniert sind.

2. Verfahren nach Anspruch 1, wobei die essbare Klebstoffzusammensetzung, welche geeignet ist, sich in Fluiden aus den Lebensmitteln zu lösen, Maltodextrin, Molkenproteinkonzentrat, einen Viskositätsindexverbesserer und Wasser beinhaltet.

3. Verfahren nach Anspruch 2, wobei der Klebstoff 40-50 Gew.% Maltodextrin, 5-15 Gew.% Molkenproteinkonzentrat, bis zu 1 % Xanthangummi und 40-50 % Wasser beinhaltet.

4. Verfahren nach einem der Ansprüche 1-3, wobei das Lebensmittel rotes Fleisch ist.

5. Verfahren nach Anspruch 4, wobei das eingeschlossene Lebensmittel mindestens 15 Tage lang auf der niedrigen Temperatur gehalten wird.

6. Verfahren nach einem der Ansprüche 1 bis 3, wobei das Lebensmittel Lachs ist.

7. Verfahren nach Anspruch 6, wobei die niedrige Temperatur ungefähr 0° C bis 2° C beträgt.

8. Verfahren nach Anspruch 7, wobei das eingeschlossene Lebensmittel mindestens 4 Tage lang auf der niedrigen Temperatur gehalten wird.

9. Verfahren nach einem der Ansprüche 1 bis 8, welches weiters den Schritt der Luftevakuierung zwischen dem Lebensmittel und der Schicht aufweist.

10. Verfahren nach einem der Ansprüche 1 bis 9, wobei das frische Lebensmittel Fleisch, Meeresfrüchte, Geflügel, Gemüse oder Obst ist.

11. Verfahren zum Beizen oder Marinieren frischer Lebensmittel während der Lagerung bei niedrigen Temperaturen in einem Kühlgerät, welches beinhaltet:
(a) Einschließen einer Portion frischen Lebensmittels in einem Blatt, welche aufweist:
(i) einen Film, der für Luft und Mikroorganismen im Wesentlichen undurchlässig und für den Kontakt mit Lebensmitteln geeignet ist; und
(ii) eine Schicht aus essbarem Klebstoff, welcher geeignet ist, sich in Fluiden aus dem Lebensmittel zu lösen, und auf eine Oberfläche des Films aufgetragen ist, wobei der Klebstoff geeignet ist, sich in Fluid aus dem Lebensmittel bei einer niedrigen Temperatur, d.h. im Bereich von -3° C bis +4° C, in einem Kühlgerät zu lösen, und ein Beiz- oder Mariniermittel auf der Oberfläche, welche zur Lebensmitteloberfläche zeigt, aufweist, wobei die Menge der Schicht ausgewählt ist, um zum Beizen oder Marinieren des Lebensmittels auszureichen; sodaß die beiz- oder mariniermittelhaltige Klebstoffschicht in engem Kontakt mit dem Lebensmittel steht; und
(b) Halten des eingeschlossenen Lebensmittels auf der niedrigen Temperatur in dem Kühlgerät zumindest bis das Lebensmittel im Wesentlichen gebeizt oder mariniert ist.

12. Verfahren nach Anspruch 11, wobei die essbare Klebstoffzusammensetzung, welche geeignet ist, sich in Fluiden aus dem Lebensmittel zu lösen, Maltodextrin, Molkenproteinkonzentrat, einen Viskositätsindexverbesserer und Wasser beinhaltet.

13. Blatt zum Einwickeln einer Portion frischen Lebensmittels zum gleichzeitigen Beizen oder Marinieren des Lebensmittels während der Lagerung bei niedrigen Temperaturen in dem Kühlgerät, wobei der Film auf mindestens einer Oberfläche eine Schicht aus essbarem Klebstoff aufweist, wobei der Klebstoff geeignet ist, sich in Fluid aus den Lebensmitteln bei niedriger Temperatur, d.h. im Bereich von -3° C bis +4° C im Kühlgerät zu lösen, und ein Beiz- oder Mariniermittel auf der der Nahrungsmitteloberfläche zugewandte Oberfläche aufweist, wobei die Menge des Mittels ausgewählt ist, um zum Beizen oder Marinieren des Lebensmittels auszureichen, wenn es in engem Kontakt mit der Lebensmitteloberfläche steht.

14. Lage nach Anspruch 13, wobei die essbare Klebstoffzusammensetzung, die geeignet ist, sich in Fluiden aus den Lebensmitteln zu lösen, Maltodextrin, Molkenproteinkonzentrat, einen Viskositätsindexverbesserer und Wasser beinhaltet.

15. Lage nach Anspruch 13, wobei der Film eine Schicht aus beiz- oder mariniermittelhaltigem Klebstoff aufweist, welche auf eine zweite Oberfläche des Films aufgetragen ist.

16. Lage nach Anspruch 13, wobei das frische Lebensmittel Fleisch, Meeresfrüchte, Geflügel, Gemüse oder Obst ist.

## Revendications

1. Méthode d'allongement de la durée de vie en rayon d'aliments frais par salage ou marinage pendant le stockage à basse température dans un compartiment réfrigérant, comportant:
a) un contact desdits aliments frais avec une feuille de film convenant pour un contact alimentaire, ledit film comportant au moins sur une surface une couche d'adhésif comestible, ledit adhésif étant apte à se dissoudre dans le fluide desdits aliments à basse température dans un compartiment réfrigérant, à savoir dans la fourchette de - 3° C à + 4° C, et ayant un agent de salage ou de marinage sur sa surface appliquée sur la surface de l'aliment, la quantité dudit agent étant déterminée de manière à suffire pour le salage ou le marinage dudit aliment lorsqu'il est en contact étroit avec la surface de l'aliment;
b) scellement de ladite combinaison film-aliment dans un récipient qui est substantiellement imperméable à l'air et aux micro-organismes; et
c) maintien de ladite combinaison film-aliment à ladite basse température dans le compartiment réfrigérant jusqu'à ce que ledit aliment soit substantiellement salé ou mariné.

2. Méthode selon la revendication 1, **caractérisée en ce que** ladite composition adhésive comestible apte à se dissoudre dans les fluides dudit aliment contient de la maltodextrine, du concentré de protéines de petit-lait, un modificateur de viscosité et de l'eau.

3. Méthode selon la revendication 2, **caractérisée en ce que** ladite composition adhésive contient 40 à 50 % en poids de maltodextrine, 5 à 15 % en poids de concentré de protéines de petit-lait, jusqu'à 1 % de gomme xanthan et 40 à 50 % d'eau.

4. Méthode selon une des revendications 1à 3, **caractérisée en ce que** ledit aliment est de la viande rouge.

5. Méthode selon la revendication 4, **caractérisée en ce que** ledit aliment scellé est maintenu à ladite basse température pendant au moins 15 jours.

6. Méthode selon une des revendications 1 à 3, **caractérisée en ce que** ledit aliment est du saumon.

7. Méthode selon la revendication 6, **caractérisée en ce que** ladite basse température est d'environ 0° C à 2° C.

8. Méthode selon la revendication 7, **caractérisée en ce que** ledit aliment scellé est maintenu à ladite basse température pendant au moins 4 jours.

9. Méthode selon une des revendications 1 à 8, incluant en plus l'étape d'évacuation d'air entre ledit aliment et ladite feuille.

10. Méthode selon une des revendications là 9, **caractérisée en ce que** ledit aliment frais est de la viande, un produit de la mer, de la volaille, des légumes ou des fruits.

11. Méthode de salage ou marinage d'aliments frais pendant le stockage à basses températures dans un compartiment réfrigérant, comprenant :
a) scellement d'une portion d'aliment frais dans une feuille comportant :
(i) un film qui est substantiellement imperméable à l'air et aux micro-organismes et convient pour un contact alimentaire ; et
(ii) une couche d'adhésif comestible apte à se dissoudre dans les fluides dudit aliment appliquée sur une surface dudit film, ledit adhésif étant apte à se dissoudre dans le fluide dudit aliment à basse température dans un compartiment réfrigérant, à savoir dans la fourchette de - 3° C à + 4° C et ayant un agent de salage ou de marinage sur sa surface appliquée sur la surface de l'aliment, la quantité de ladite couche étant déterminée de manière à suffire pour le salage ou le marinage dudit aliment; de manière à ce que ladite couche d'adhésif contenant un agent de salage ou marinage soit en contact étroit avec ledit aliment ; et
b) le maintien dudit aliment scellé à ladite basse température dans le compartiment réfrigérant au moins jusqu'à ce que ledit aliment soit substantiellement salé ou mariné.

12. Méthode selon la revendication 11, **caractérisé en ce que** ladite composition adhésive comestible apte à se dissoudre dans les fluides dudit aliment contient de la maltodextrine, du concentré de protéines de petit-lait, un modificateur de viscosité et de l'eau.

13. Feuille pour envelopper une portion d'aliment frais aux fins d'assurer un salage ou marinage simultané dudit aliment pendant le stockage à basses températures dans le compartiment réfrigérant, **caractérisé en ce que** ledit film a, au moins sur une surface, une couche d'adhésif comestible, ledit adhésif étant apte à se dissoudre dans le fluide desdits aliments à basse température dans le compartiment réfrigérant, à savoir dans la fourchette de - 3° C à + 4° C, et ayant un agent de salage ou marinage sur sa surface appliquée sur la surface de l'aliment, la quantité dudit agent étant déterminée de manière à suffire pour le salage ou le marinage dudit aliment lorsqu'il est en contact étroit avec la surface de l'aliment.

14. Feuille selon la revendication 13, **caractérisée en ce que** ladite composition adhésive comestible apte à se dissoudre dans les fluides dudit aliment contient de la maltodextrine, du concentré de protéines de petit-lait, un modificateur de viscosité et de l'eau.

15. Feuille selon la revendication 13, **caractérisée en ce que** ledit film comporte une couche dudit agent de salage ou de marinage contenant de l'adhésif appliquée sur une seconde surface dudit film.

16. Feuille selon la revendication 13, **caractérisée en ce que** ledi aliment frais est de la viande, un produit de la mer, de la volaille, des légumes ou des fruits.
